# EUROPEAN PATENT SPECIFICATION

(11) **EP 2 683 217 B1**
(45) Date of publication and mention of the grant of the patent: **09.08.2017**
(21) Application number: 12752297.7
(22) Date of filing: 16.02.2012
(51) Int. Cl.: H05B 6/12, H05B 6/36

(54) **COOKING DEVICE**
KOCHVORRICHTUNG
DISPOSITIF DE CUISSON

(30) Priority: 28.02.2011 JP 2011042786
(43) Date of publication of application: 08.01.2014
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: TANAKA, Michio, Fukaya-shi, Saitama 369-1295 (JP)
(74) Representative: Pfenning, Meinig & Partner mbB
(86) International application number: PCT/JP2012/001006
(87) International publication number: WO 2012/117679

(56) References cited:
- WO-A1-2010/137271
- DE-B- 1 270 201
- GB-A- 561 669
- JP-A- 2003 100 429
- JP-A- 2004 031 160
- JP-A- 2005 005 132
- JP-A- 2005 005 132
- JP-A- 2010 282 782
- JP-U- 62 057 010

## Description

### Technical Field

The present invention relates to a heating cooker that performs induction heating of a pan, which is a cooking container, with a heating coil.

### Background Art

There is a conventional heating cooker in which a heating coil arranged under a top plate is placed in a concave portion of a U-shaped coil base (ferrite) extending from within the inner circumference to without the outer circumference of the heating coil (see Patent Literature 1, for example).

GB 561 669 A describes the facilitation of the interchange of hotplates in order to simplify the initial mounting of a hotplate in a new cooker, to cheapen and improve the construction and furthermore to facilitate inspection and cleaning and thus provides a hotplate that is carried by an undercarriage attachable to the hinged top plate of the cooker and connected to a terminal block on the underside of this undercarriage such that the cables from the hotplate can go directly to these terminals and be readily and quickly attached either without insulation of by slipping a sleeve of insulating material over each.

DE 12 70 201 B describes a hot plate wherein angled short pins are directly attached to the end turns of the heating coils, wherein only slightly, preferably only about 7mm, outstanding free ends are provided for connecting with the current-supply lines. Preferably, the pins are bent at right angles out of the plane of the heating coils.

JP 2005 005132 A describes an induction heating cooker manufacturable at a low cost by improving assemblability by facilitating connection of three heating coils having different winding diameters, and connection of the heating coils to an output control board, and by simplifying wiring and a structure. This induction heating cooker is provided with a heating coil composed by arranging the three heating coils having different winding diameters in a coil base in a concentric form from the center side toward the circumferential side; and the connection conditions of electric circuits of the heating coils are changed according to a material of a pan, the state or the like of a load and the like. The coil base is provided with: a terminal block for connecting one end of the second heating coil to one end of the third heating coil; and a terminal board for connecting one end of the first heating coil to one end of the third heating coil. In addition, an output control board equipped with a circuit changeover device for the three heating coils is housed in a board housing case located below the heating coil in a body; and a terminal block and a terminal block are mounted in the housing case to electrically connect them to the terminal block and the terminal block.

### Citation List

### Patent Literature

Patent Literature 1: Japanese Unexamined Patent Application Publication No. 2003-100429 (Fig. 1)

### Summary of Invention

### Technical Problem

In a coil base on which a plurality of heating coils are mounted, external lead wires for the heating coils protrude out of the coil base, and the number of the external lead wires protruding out of the coil base corresponds to the number of the heating coils. Because the number of external lead wire increases when the number of heating coils is increased, the external lead wire protruding out of the coil base is disadvantageously increased, causing a problem in efficiency in assembling the coil unit. Furthermore, with the increased number of external lead wires of the heating coils, the cooling air might be blocked, which might deteriorate the cooling effect.

The present invention is made to overcome the foregoing problems and an object thereof is to provide a heating cooker that, even if with a plurality of heating coils, does not require an increased number of external lead wires, does not reduce the cooling effect, and has good efficiency in assembling. Solution to Problem

A heating cooker of the invention includes a main body constituting an outer wall; a top plate that is provided on a top side of the main body and on which a cooking container is placed; a coil base that is arranged under the top plate, and on an inner side of which a plurality of heating coils are arranged; and connecting means configured to connect a lead wire for one of heating coils paired for mutual connection, of the plurality of heating coils, to a lead wire for the other of the paired heating coil, in which the connecting means is provided on the inner side of the coil base.

### Advantageous Effects of Invention

According to the present invention, the lead wires for the heating coils paired for mutual connection of the plurality of heating coils are connected to one another by the connecting means provided on the inner side of the coil base. Accordingly, it is possible to easily connect the lead wires without causing the lead wires to protrude out of the coil base, and hence, workability is improved. Furthermore, since, as stated above, the lead wires for the pair of heating coils can be connected to one another via the connecting means, the number of external lead wires protruding out of the coil base can be reduced. In addition, since the lead lines can be wired on the inner side of the coil base and the number of external lead wires can be suppressed even if the number of heating coils is increased. Hence there is no longer blocking of the cooling air by the increased number of external lead wires. Brief Description of Drawings

[Fig. 1] Fig. 1 is a perspective view of a heating cooker according to an embodiment.
[Fig. 2] Fig. 2 is a perspective view of the heating cooker according to the embodiment in which a top plate is removed.
[Fig. 3] Fig. 3 is an enlarged top view of a coil unit on the left side of the heating cooker of Fig. 2.
[Fig. 4] Fig. 4 is a bottom view of the coil unit in which the coil unit of Fig. 3 has been turned around by 180 degrees.
[Fig. 5] Fig. 5 is an enlarged plan view of a terminal block that is positioned on the lower side among three terminal blocks in the bottom view of Fig. 4.
[Fig. 6] Fig. 6 is an enlarged cross-sectional view of a terminal block of Fig. 4 seen from the side.

### Description of Embodiment

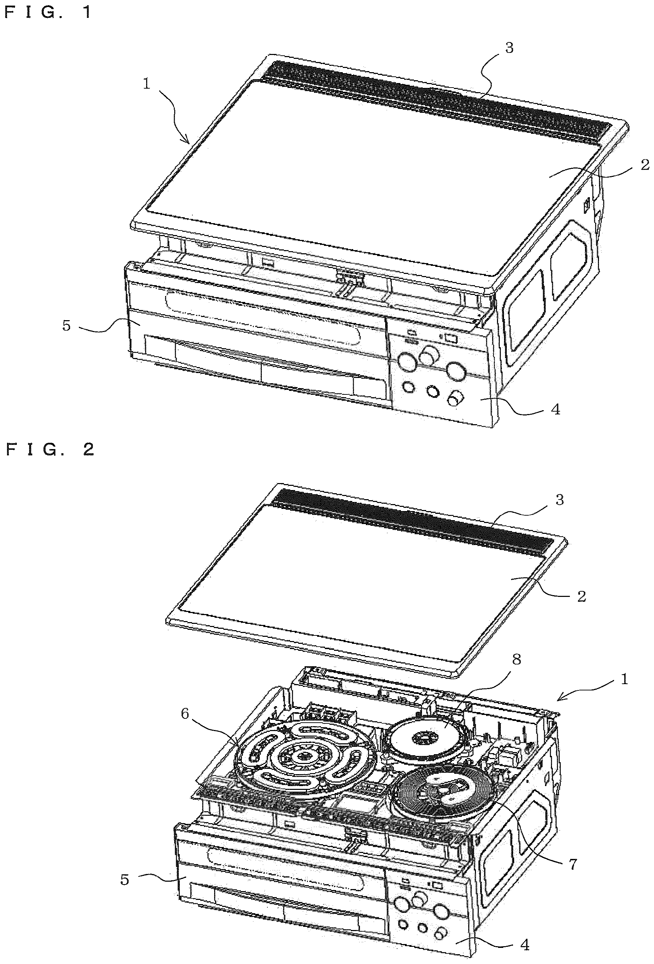

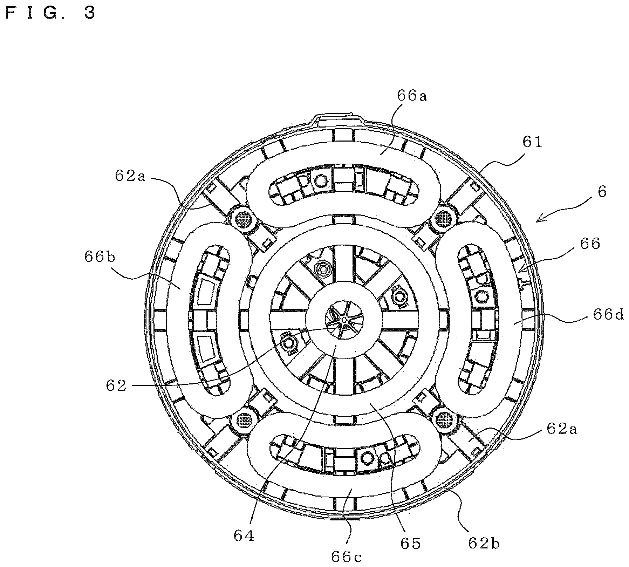

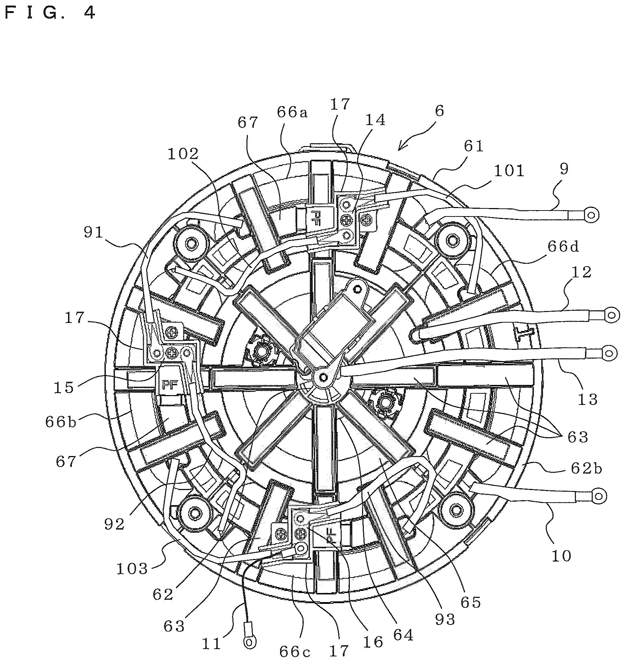

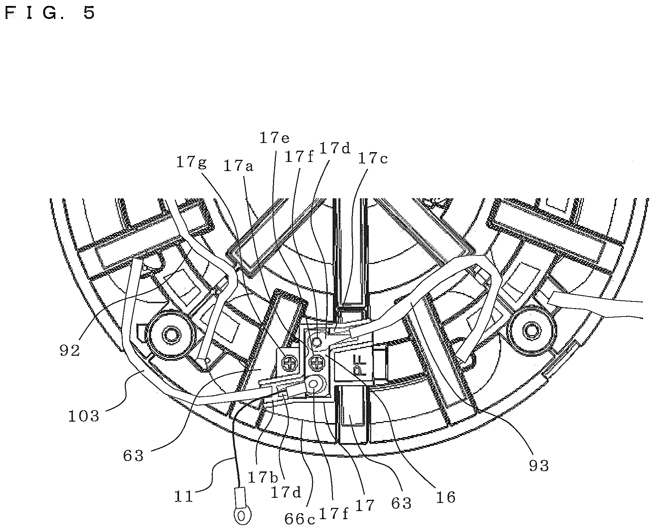

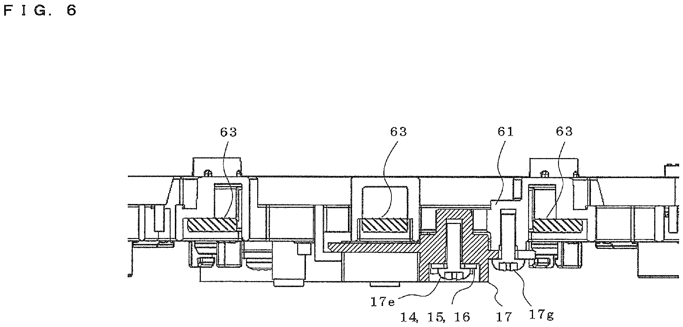

Fig. 1 is a perspective view of a heating cooker according to an embodiment. Fig. 2 is a perspective view of the heating cooker according to the embodiment in which a top plate is removed. Fig. 3 is an enlarged top view of a coil unit on the left side of the heating cooker of Fig. 2. Fig. 4 is a bottom view of the coil unit in which the coil unit of Fig. 3 has been turned around by 180 degrees. Fig. 5 is an enlarged plan view of a terminal block that is positioned on the lower side among three terminal blocks in the bottom view of Fig. 4. Fig. 6 is an enlarged cross-sectional view of the terminal block of Fig. 4 seen from the side.

Referring to theses diagrams, the heating cooker of the embodiment includes a heating cooker main body 1 that constitutes an outer wall; a top plate 2 that is mounted so as to cover the top opening surface of the heating cooker main body 1 and that has an outer frame in its outer circumference; a cover 3 of an intake/exhaust port, in which the cover 3 is detachably provided to the outer frame in the rear portion of the top plate 2; an operating unit 4 arranged on the front side of the heating cooker main body 1, and a grill door 5 provided on the front side of the heating cooker main body 1 and adjacent to the operating unit 4. The top plate 2 is constituted by a heat-resistant tempered glass, for example. For example, two coil units 6 and 7 and a single heater unit 8 are arranged under the top plate 2.

As will be described later, the coil unit 6 is provided with a plurality of heating coils. The coil unit 7 is provided with a ring-shaped heating coil of a small diameter and a ring-shaped heating coil of a large diameter. Further, the heater unit 8 is provided with a radiant heater. When a high-frequency current flows in a heating coil described above, magnetic flux is generated from the heating coil in accordance with the high-frequency current, and a pan or the like that is a cooking container placed on the top plate 2 is induction-heated by the magnetic flux. In place of the heater unit 8, a coil unit may be used that has an outer diameter smaller than that of the coil unit 7.

As illustrated in Figs. 3 and 4, the coil unit 6 described above includes a coil base 61, a plurality of ferrite pieces 63, and a plurality of heating coils 64, 65, and 66. The coil base 61 has a disk shape and has a center support 62 positioned in a central portion thereof, a plurality of beams 62a that extend radially with this center support 62 at its center, and a ring-shaped side plate 62b that is connected to each end of the beams 62a. Furthermore, each of the beams 62a has a U-shape having a cross-section that opens downwards, and the ferrite pieces 63 are fitted in and fixed to the openings. In addition, the heating coils 64, 65, and 66 described later are provided on the top side surface of the coil base 61, that is, the opposite side to the ferrite pieces 63 side of the beams 62a.

The ferrite pieces 63 each serves as a magnetic path of the magnetic flux that has leaked downwards and laterally of the magnetic fluxes generated from the heating coils 64, 65, and 66. With this function, it is possible to prevent the magnetic flux from leaking from the coil unit 6, and thus prevent leaking such that there is no adverse effect to electronic components on the circuit board provided in the operating unit 4 and to electronic components on the circuit board configured to supply high-frequency currents to the heating coils 64, 65, and 66.

The heating coil 64 of the coil unit 6 has a ring shape and is arranged so as to surround the outer circumference of the center support 62 with the center support 62 at its center. The heating coil 65 has a ring shape that is larger than the outer diameter of the heating coil 64 and is arranged so as to surround the outer circumference of the heating coil 64. The heating coils 66 include, for example, four heating coils 66a, 66b, 66c, and 66d. Each of the heating coils 66a, 66b, 66c, and 66d has a deformed-ring-shape that extends in the circumferential direction of the coil base 61. The heating coils 66a, 66b, 66c, and 66d are arranged with equal spacing therebetween around the heating coil 65 in the circumferential direction.

The heating coils 64 and 65 that are arranged in the center portion of the coil unit 6 are connected in series, for example. An external lead wire 13 is connected to one end of the heating coil 64, and an external lead wire 12 is connected to one end of the heating coil 65. Among the four heating coils 66a, 66b, 66c, and 66d that are arranged around the heating coil 65, the heating coil 66a and the heating coil 64c are arranged to be opposed to each other and the heating coil 66b and the heating coil 64d are arranged to be opposed to each other.

Furthermore, on the bottom face of the coil unit 6, for example, three terminal blocks 17 are arrayed in the circumferential direction. As illustrated in Fig. 5, the terminal block 17 includes a first groove 17a, a second groove 17b that is formed so as to be bent in a substantially right angle from one end portion of the first groove 17a, and a third groove 17c that is formed so as to be bent in a substantially right angle from the other end portion of the first groove 17a in a direction opposite to the second groove 17b. The above-described first groove 17a, second groove 17b, and third groove 17c are integrally formed with the cross-sectional shape being a U-shaped groove shape. In a planar view, the shape of the terminal block 17 is a crank shape.

Furthermore, connecting means 16 is mounted inside the first groove 17a of the terminal block 17. The connecting means 16 electrically connects terminals 17d of lead wires that are each arranged in the second groove 17b and the third groove 17c. The connecting means 16 includes a metal plate made of metal that has conductivity and is secured to the terminal block 17 by a screw 17e. Note that each terminal 17d of the lead wire is secured to the connection means 16 by a screw 17f.

The terminal block 17 configured in this way is arranged such that the longitudinal axis of the first groove 17a in which the connecting means 16 is provided is directed to the center of the coil base 61 and secured to the coil base 61 with a screw 17g, and further, such that a portion of the terminal block 17 is placed in between the neighboring ferrite pieces 63 (see Fig. 6).

Note that one screw may serve both as the screw 17g used to secure the terminal block 17 to the coil base 61 and as the screw 17e for securing each connecting means 16 to the terminal block 17. For example, the connecting means 16 and the terminal block 17 are screwed together to the coil base 61 with a single screw. With this configuration, it is possible to achieve reduction of the number of parts and reduction of man-hours (reduction in steps of the screw fastening) in the manufacturing process.

In the configuration of the terminal block 17 described above, a terminal block 17 to which the connecting means 16 is installed has been described. Note that the two other terminal blocks 17 on which the connecting means 14 and 15 are mounted have the same configuration.

The heating coil 66a has one end connected to the external lead wire 9 and the other end connected to the lead wire 91. The lead wire 91 is connected to the connecting means 15 that is arranged under the heating coil 66b. The heating coil 66c that is arranged to be opposed to the heating coil 66a has one end connected to the lead wire 92 and the other end connected to the lead wire 93. Furthermore, the lead wire 92 is connected to the above-described connecting means 15, and the other lead wire 93 of the coil 66c is connected to the connecting means 16 that is arranged under this coil 66c.

Moreover, the heating coil 66d has one end connected to the external lead wire 10 and the other end connected to the lead wire 101. The lead wire 101 is connected to the connecting means 14 that is disposed under the heating coil 66a. The heating coil 66b that is arranged to be opposed to the heating coil 66d has one end connected to the lead wire 102 and the other end connected to the lead wire 103. Furthermore, the lead wire 102 is connected to the above-described connecting means 14, and the other lead wire 103 for the coil 66b is connected to the above-described connecting means 16. A common line 11 is connected to this connecting means 16.

The six lead wires 91, 92, 93, 101, 102, and 103 that are used as connecting wires of the heating coils 66a, 66b, 66c, and 66d have the same length and are wired on the inner side of the coil base 61.

In the present embodiment, a single circuit is constituted by the heating coils 64 and 65 serving as a single coil, another single circuit is constituted by two heating coils 66a and 66c, and yet another single circuit is constituted by two heating coils 66b and 66d. Therefore, the present embodiment includes three circuits in total. The number of external lead wires 9, 10, 12, and 13 are four, and there are five wires, including the common line 11, for the five heating coils. This common line 11 is a common line for the circuit of the heating coils 66a and 66c and the circuit of the heating coils 66b and 66d. These three circuits can be switched in accordance with the pan size and/or the type of cooking.

In the present embodiment, as described above, advantageous effects set forth below can be obtained.
(1) The lead wires 91, 92, 93, 101, 102, and 103 of the heating coils 66a and 66c and the heating coils 66b and 66d opposed to each other are connected to one another using crank-shaped terminal blocks 17 that are arranged on the inner side of the coil base 61. Accordingly, the number of external lead wires 9 and 10 that protrude outside the coil base 61 becomes fewer, and consequently, the number of the wires including the common line 11 and the external lead wires 12 and 13 of the heating coils 64 and 65 is small, that is five.
(2) Since each terminal block 17 has a crank-shape, each of the lead wires 91, 92, 93, 101, 102, and 103 can be wired on the inner side of the coil base 61 along the circumferential direction without crossing each other. In particular, in the terminal blocks 17, since the longitudinal axis of each first groove 17a in which the corresponding one of the connecting means 14, 15, and 16 is provided is directed to the center of the coil base 61, it is possible to effectively utilize the space of the coil base 61 in the diametric direction and arrange the terminal blocks 17.
   Furthermore, in order to minimize protrusion out of the coil base 61 in the thickness direction, a portion of each terminal block 17 is placed in between the neighboring ferrite pieces 63. Therefore, the thickness of the coil base 61 can be suppressed.
(3) By wiring on the inner side of the coil base 61 along the circumferential direction, the embodiment is configured such that lead wires except for the external lead wires 9, 10, 12, and 13 (including the common line 11) that are connected to the substrate do not protrude out of the coil base. Accordingly, it is possible to secure a space around the coil unit 6 and more easily use the coil unit in other types of heating cooker than conventional ones.
(4) Since the present embodiment is structured such that only the external lead wires 9, 10, 12, and 13 (including the common line 11) are exposed from the coil base 61, connecting the lead wire in a succeeding process is facilitated and errors in assembling can be reduced.
(5) The wiring on the inner side of the coil base 61 eliminates the disadvantage that the cooling air blown to the bottom face of the coil unit 6 is blocked.
(6) Since each of the lead wires 91, 92, 93, 101, 102, and 103 has the same length, fabrication and management of the lead wire is facilitated, and, further, wiring work is facilitated.

### Reference Signs List

1 heating cooker main body; 2 top plate; 3 cover; 4 operating unit; 5 grill door; 6 coil unit; 61 coil base; 62 center support; 62a beam; 62b side plate of the coil base; 63 ferrite piece; 64, 65, 66 heating coil; 67 support of the coil base; 7 coil unit; 8 heater unit; 9 external lead wire; 91, 92, 93 lead wire; 10 external lead wire; 101, 102, 103 lead wire; 11 common line; 12, 13 external lead wire; 14, 15, 16 connecting means; 17 terminal block; 17a first groove; 17b second groove; 17c third groove; 17d terminal of the lead wire; and 17e, 17f, 17g screw.

## Claims

1. A heating cooker, comprising:
a main body (1) constituting an outer wall;
a top plate (2) that is provided on a top side of the main body (1) and on which a cooking container can be placed;
a coil base (61) that is arranged under the top plate (2), and on an inner side within the circumference of which a plurality of heating coils (64, 65, 66) are arranged;
the heating coils being pairwise mutually connected in series; and
connecting means (14, 15, 16) configured to connect a lead wire (91, 92, 93, 101, 102, 103) for one (66) of a pair of heating coils (66), which is paired for mutual connection, to a lead wire (91, 92, 101, 102, 103) for the other (66) of said pair of paired heating coils (66), wherein
the connecting means (14, 15, 16) is provided on the inner side within the circumference of the coil base (61); and **characterised in that** the connecting means (14, 15, 16) is provided in between magnetic materials (63) that are radially provided in the coil base (61).

2. The heating cooker of claim 1, wherein the connecting means (14, 15, 16) is provided on a bottom surface of the coil base (61) that is opposed to the top plate (2).

3. The heating cooker of any one of claims 1 to 2, wherein
the plurality of heating coils (64, 65, 66) comprise a plurality of heating coils (66a, 66b, 66c, 66d) arrayed in a circumferential direction of the coil base (61), and
the connecting means (14, 15, 16) connects a lead wire (91, 92, 101, 102) for one of a mutually opposed pair of heating coils (66a, 66b, 66c, 66d), of the heating coils (66a, 66b, 66c, 66d) arrayed in the circumferential direction of the coil base (61), to a lead wire (91, 92, 101, 102) for the other of the mutually opposed pair of heating coils (66a, 66b, 66c, 66d).

4. The heating cooker of any one of claims 1 to 3, wherein the lead wires (91, 92, 93, 101, 102, 103) connected to the connecting means (14, 15, 16) are wired on the inner side within the circumference of the coil base (61).

5. The heating cooker of any one of claims 1 to 4, wherein a number of external lead wires (9, 10, 12, 13) for the plurality of heating coils (66) is equal to or less than a number of the plurality of heating coils (66).

6. The heating cooker of any one of claims 1 to 5, wherein each of the lead wires (91, 92, 93, 101, 102, 103) for the plurality of heating coils (66) has a same length.

## Patentansprüche

1. Heizkochgerät, enthaltend:
einen Hauptkörper (1), der eine äußere Wand bildet;
eine Oberplatte (2), die auf einer Oberseite des Hauptkörpers (1) angeordnet ist und auf der ein Kochbehälter angeordnet werden kann;
eine Spulenbasis (61), die unter der Oberplatte (2) angeordnet ist und auf einer Innenseite innerhalb des Umfangs dieser eine Vielzahl von Heizspulen (64, 65, 66) angeordnet sind;
wobei die Heizspulen paarweise wechselseitig in Reihe verbunden sind; und
ein Verbindungsmittel (14, 15, 16), das ausgebildet ist, ein Hauptkabel (91, 92, 93, 101, 102, 103) für eine Heizspule (66) eines Paares von Heizspulen (66), die für wechselseitige Verbindung gepaart sind, mit einem Hauptkabel (91, 92, 101, 102, 103) für die andere Heizspule (66) des genannten Paares von gepaarten Heizspulen (66) zu verbinden,
wobei das Verbindungsmittel (14, 15, 16) auf der Innenseite innerhalb des Umfangs der Spulenbasis (61) angeordnet ist; und
wobei das Verbindungsmittel (14, 15, 16) zwischen magnetischen Materialien (63) zur Verfügung gestellt wird, die in radialer Richtung in der Spulenbasis (61) vorgesehen sind.

2. Das Heizkochgerät nach Anspruch 1, wobei das Verbindungsmittel (14, 15, 16) auf einer Bodenfläche der Spulenbasis (61), die der Oberplatte (2) entgegengesetzt ist, vorgesehen ist.

3. Das Heizkochgerät nach einem der Ansprüche 1 bis 2, wobei
die Vielzahl von Heizspulen (64, 65, 66) eine Vielzahl von Heizspulen (66a, 66b, 66c, 66d) enthält, die in einer Umfangsrichtung der Spulenbasis (61) angeordnet sind, und
das Verbindungsmittel (14, 15, 16) ein Hauptkabel (91, 92, 101, 102) für eine Heizspule eines gegenseitig gegenüberliegenden Paares von Heizspulen (66a, 66b, 66c, 66d) der Heizspulen (66a, 66b, 66c, 66d), die in der Umfangsrichtung der Spulenbasis (61) angeordnet sind, mit einem Hauptkabel (91, 92, 101, 102) für die andere Heizspule des gegenseitig gegenüberliegenden Paares von Heizspulen (66a, 66b, 66c, 66d) verbindet.

4. Das Heizkochgerät nach einem der Ansprüche 1 bis 3, wobei die Hauptkabel (91, 92, 93, 101, 102, 103), die mit dem Verbindungsmittel (14, 15, 16) verbunden sind, auf der Innenseite innerhalb des Umfangs der Spulenbasis (31) verdrahtet sind.

5. Das Heizkochgerät nach einem der Ansprüche 1 bis 4, wobei eine Anzahl an äußeren Hauptkabeln (9, 10, 12, 13) für die Vielzahl an Heizspulen (66) gleich ist oder geringer als eine Anzahl der Vielzahl an Heizspulen (66).

6. Das Heizkochgerät nach einem der Ansprüche 1 bis 5, wobei jedes der Hauptkabel (91, 92, 93, 101, 102, 103) für die Vielzahl an Heizspulen (66) dieselbe Länge aufweist.

## Revendications

1. Dispositif de cuisson chauffant comprenant :
un corps principal (1) constituant une paroi externe ;
une plaque supérieure (2) qui est prévue sur un côté supérieur du corps principal (1) et sur laquelle un récipient de cuisson peut être placé ;
une base de serpentin (61) qui est agencée sous la plaque supérieure (2) et sur un côté interne à l'intérieur de la circonférence de laquelle une pluralité de serpentins de chauffage (64, 65, 66) sont agencés ;
les serpentins de chauffage étant disposés par paire, mutuellement raccordés en série ; et
un moyen de raccordement (14, 15, 16) configuré pour raccorder un fil conducteur (91, 92, 93, 101, 102, 103) pour l'un (66) d'une paire de serpentins de chauffage (66), qui est en paire pour le raccordement mutuel, à un fil conducteur (91, 92, 101, 102, 103) pour l'autre (66) de ladite paire de serpentins de chauffage (66) en paire, dans lequel :
le moyen de raccordement (14, 15, 16) est prévu sur le côté interne à l'intérieur de la circonférence de la base de serpentin (61) ; et dans lequel :
le moyen de raccordement (14, 15, 16) est prévu entre des matériaux magnétiques (63) qui sont prévus radialement dans la base de serpentin (61).

2. Dispositif de cuisson chauffant selon la revendication 1, dans lequel le moyen de raccordement (14, 15, 16) est prévu sur une surface inférieure de la base de serpentin (61) qui est opposée à la plaque supérieure (2).

3. Dispositif de cuisson chauffant selon l'une quelconque des revendications 1 à 2, dans lequel :
la pluralité de serpentins de chauffage (64, 65, 66) comprend une pluralité de serpentins de chauffage (66a, 66b, 66c, 66d) agencés dans une direction circonférentielle de la base de serpentin (61), et
le moyen de raccordement (14, 15, 16) raccorde un fil conducteur (91, 92, 101, 102) pour l'un d'une paire de serpentins de chauffage mutuellement opposés (66a, 66b, 66c, 66d), des serpentins de chauffage (66a, 66b, 66c, 66d) agencés dans la direction circonférentielle de la base de serpentin (61) à un fil conducteur (91, 92, 101, 102) pour l'autre de la paire de serpentins de chauffage mutuellement opposés (66a, 66b, 66c, 66d).

4. Dispositif de cuisson chauffant selon l'une quelconque des revendications 1 à 3, dans lequel les fils conducteurs (91, 92, 93, 101, 102, 103) raccordés au moyen de raccordement (14, 15, 16) sont câblés sur le côté interne à l'intérieur de la circonférence de la base de serpentin (61).

5. Dispositif de cuisson chauffant selon l'une quelconque des revendications 1 à 4, dans lequel un nombre de fils conducteurs externes (9, 10, 12, 13) pour la pluralité de serpentins de chauffage (66) est égal ou inférieur à un nombre de la pluralité de serpentins de chauffage (66).

6. Dispositif de cuisson chauffant selon l'une quelconque des revendications 1 à 5, dans lequel chacun des fils conducteurs (91, 92, 93, 101, 102, 103) pour la pluralité de serpentins de chauffage (66) a la même longueur.
